# EUROPEAN PATENT APPLICATION

(11) **EP 4 489 334 A1**
(43) Date of publication of application: **08.01.2025**
(21) Application number: 23769638.0
(22) Date of filing: 08.03.2023
(51) Int. Cl.: H04L 1/00, H04B 17/309

(54) **CHANNEL STATE INFORMATION FEEDBACK METHOD AND APPARATUS, AND STORAGE MEDIUM AND ELECTRONIC APPARATUS**

(30) Priority: 18.03.2022 CN 202210270191
(71) Applicant: ZTE Corporation, Shenzhen, Guangdong 518057 (CN)
(72) Inventor: XIAO, Huahua, Shenzhen, Guangdong 518057 (CN); LU, Zhaohua, Shenzhen, Guangdong 518057 (CN); WU, Hao, Shenzhen, Guangdong 518057 (CN); LI, Lun, Shenzhen, Guangdong 518057 (CN)
(74) Representative: Deambrogi, Edgardo
(86) International application number: PCT/CN2023/080354
(87) International publication number: WO 2023/174132

(57) **Abstract**

The embodiments of the present disclosure provide a method for feeding back channel state information and apparatus, a storage medium, and an electronic device. The method comprises: acquiring first check channel information; determining first check channel state information according to the first check channel information; and feeding back the first check channel state information. By means of the technical solution, at least the problem in the related art of how to acquire more accurate channel state information is solved.

## Description

The present disclosure claims priority to Chinese Patent Application No. 202210270191.8, filed to the China National Intellectual Property Administration on 18 March 2022 and entitled "Channel State Information Feedback Method and Apparatus, and Storage Medium and Electronic Apparatus", which is incorporated herein by reference in its entirety.

### Technical Field

The present disclosure relates to the field of communications, and in particular, to a method and apparatus for feeding back channel state information, a storage medium, and an electronic device.

### Background

The multi-antenna technology can improve the performance of a wireless communication system; however, in order to achieve the advantages of the multi-antenna technology, a sending end needs to obtain accurate channel state information (CSI) of a channel, and generally, for a downlink, particularly a frequency division multiplexing system, a terminal needs to feed back the channel state information of the downlink. In the prior art, Artificial Intelligence (Al) or Machine Learning (ML) is widely applied to various industries, and in particular, the artificial intelligence based on deep learning has a strong feature extraction capability, and it is introduced to a wireless communication system to be deeply integrated with the wireless communication system, so as to improve the performance of the wireless communication system. For example, if the Al is used for feedback of channel state information, compared with the conventional codebook-based method, a better performance can be obtained. Although the Al has a certain generalization performance, with the change of the environment, for example, the user moves from indoor to outdoor, from urban micro to urban macro, and with the change of the environment, the Al network parameters trained in a certain scenario may no longer be suitable for a new environment, thereby causing degradation of the performance.

Therefore, there is a need for a method for determining the quality of a neural network, and adjusting appropriate network parameters according to a determination result, or adjusting a CSI feedback mode according to the quality of the neural network, thereby improving the accuracy of channel state information.

For the problem of how to use a method to determine the quality of a network and obtain more accurate channel state information in the related art, no effective solution has been proposed.

Therefore, there is a need for improvements in the related art to overcome the deficiencies in the related art.

### Summary

The embodiments of the present disclosure provide a method and apparatus for feeding back channel state information, a storage medium, and an electronic device, so as to at least solve the problem of how to acquire more accurate channel state information.

According to an aspect of the embodiments of the present disclosure, provided is a method for feeding back channel state information, comprising: acquiring first check channel information; determining first check channel state information according to the first check channel information; and feeding back the first check channel state information.

According to another aspect of the embodiments of the present disclosure, further provided is a method for receiving channel state information, comprising: receiving first check channel state information; determining second check channel information according to the first check channel state information; and determining a network quality identifier according to the second check channel information.

According to another aspect of the embodiments of the present disclosure, further provided is an apparatus for feeding back channel state information, comprising: an acquisition module, configured to acquire first check channel information; a first determination module, configured to determine first check channel state information according to the first check channel information; and a feedback module, configured to feed back the first check channel state information.

According to another aspect of the embodiments of the present disclosure, further provided is an apparatus for receiving channel state information, comprising: a receiving module, configured to receive first check channel state information; a second determination module, configured to determine second check channel information according to the first check channel state information; and a third determination module, configured to determine a network quality identifier according to the second check channel information.

According to another aspect of the embodiments of the present disclosure, provided is a computer readable storage medium which stores a computer program, wherein the computer program is configured to execute, during running, the method for feeding back the channel state information.

According to another aspect of the embodiments of the present disclosure, provided is an electronic device, comprising a memory, a processor and a computer program which is stored in the memory and can run on the processor, wherein the processor executes, by the computer program, the method for feeding back the channel state information.

According to the present disclosure, by acquiring first check channel information; determining first check channel state information according to the first check channel information; and feeding back the first check channel state information, the technical problem of how to acquire more accurate channel state information is solved.

### Brief Description of the Drawings

The drawings illustrated herein are used for providing further understanding of the present disclosure and constitute a part of the present disclosure, and the exemplary embodiments of the present disclosure and illustrations thereof are used for explaining the present disclosure, rather than constitute inappropriate limitation on the present disclosure. In the drawings:
Fig. 1 is a schematic diagram of the working principle of an encoder and a decoder in the related art;
Fig. 2 is a hardware structure block diagram of a computer terminal of a method for feeding back channel state information according to an embodiment of the present disclosure;
Fig. 3 is a flowchart of a method for feeding back channel state information according to an embodiment of the present disclosure;
Fig. 4 is a flowchart of a method for receiving channel state information according to an embodiment of the present disclosure;
Fig. 5 is a schematic diagram of the positions of check data and channel data according to an embodiment of the present disclosure;
Fig. 6 is a structural block diagram of an apparatus for feeding back channel state information according to an embodiment of the present disclosure;
Fig. 7 is a structural block diagram of an apparatus for receiving channel state information according to an embodiment of the present disclosure.

### Detailed Description of the Embodiments

In order to enable those skilled in the art to understand the solutions of some embodiments of the present disclosure better, hereinafter, the technical solutions in the embodiments of the present disclosure will be described clearly and thoroughly with reference to the accompanying drawings of embodiments of the present disclosure. Obviously, the embodiments as described are only some of the embodiments of the present disclosure, and are not all the embodiments. On the basis of the embodiments in the present disclosure, all other embodiments obtained by a person of ordinary skill in the art without inventive effort shall all belong to the scope of protection of the present disclosure.

It is to be noted that the terms "first", "second", etc. in the description, claims and drawings of the present disclosure are used to distinguish similar objects, and are not necessarily used to describe a specific sequence or a precedence order. It should be understood that the data so used may be interchanged wherein appropriate so that embodiments of the present disclosure described herein may be implemented in sequences other than those illustrated or described herein. In addition, the terms "comprise" and "have", and any variations thereof are intended to cover a non-exclusive inclusion, for example, a process, method, system, product, or device that comprises a series of steps or units is not necessarily limited to those steps or units that are clearly listed, but may comprise other steps or units that are not clearly listed or inherent to such process, method, product, or device.

Next, technical terms in the present disclosure will be explained.

In the present disclosure, a network architecture of a mobile communication network (including but not limited to 3G, 4G and 5G and a future mobile communication network) may include a network side device (such as a base station) and a receiving side device (such as a terminal). It should be understood that, in this example, the first communication node (which is also referred to as a first communication node device) in the downlink may be a base station side device, and the second communication node (which is also referred to as a second communication node device) may be a terminal side device. Certainly, the first communication node in the uplink may also be a terminal side device, and the second communication node may also be a base station side device. When the two communication nodes perform device-to-device communication, both the first communication node and the second communication node may be base stations or terminals.

In the present disclosure, the base station may comprise an evolved base station in Long Term Evolution (LTE), an evolved base station in Long Term Evolution advanced (LTEA), a base station in an evolved Node B (eNB or eNodeB), a base station device in a 5G network, a base station in a future communication system, etc. The base station may comprise various network side devices, such as a macro base station, a micro base station, a home base station, a radio remote, a router, a Wireless Fidelity (WiFi) device, a primary cell and a secondary cell, and a location management function (LMF) device.

In the present disclosure, a terminal is a device having a wireless transceiving function and can be deployed on land, including indoor or outdoor, handheld, wearable, or vehicle-mounted; can also be deployed on water (such as a ship), and can also be deployed in the air (such as an airplane, an air balloon and a satellite). The terminal may be a mobile phone, a tablet computer (Pad), a computer with a wireless receiving and emitting function, a virtual reality (VR) terminal, an augmented reality (AR) terminal, a wireless terminal in industrial control, a wireless terminal in self driving, a wireless terminal in remote medicine, a wireless terminal in smart grid, a wireless terminal in transportation safety, a wireless terminal in smart city, a wireless terminal in smart home, etc. The embodiments of the present disclosure do not limit the application scenarios. The terminal may also be sometimes referred to as a user, a User Equipment (UE), an access terminal, a UE unit, a UE station, a mobile station, a mobile station, a remote station, a remote terminal, a mobile device, a UE terminal, a wireless communication device, a UE proxy, a UE device, or the like, and the embodiments of the present disclosure are not limited thereto.

In the present disclosure, the high-layer signaling comprises but is not limited to a radio resource control (RRC) and a media access control-control element (MAC CE), and physical-layer signaling can also be transmitted between a base station and a terminal, for example, in downlink, the physical layer signalling can be transmitted on a Physical Downlink Control Channel (PDCCH); in uplink, the physical layer signalling can be transmitted on a Physical Uplink Control Channel (PUCCH); the physical layer signalling can also be transmitted on a Physical Random-Access Channel (PRACH).

In the present disclosure, the first signaling, the second signaling, the third signaling and the fourth signaling may be high-layer signaling and/or physical-layer signaling.

In the present disclosure, the indicator of various parameters can also be referred to as an index, which are completely equivalent concepts, for example, a neural network indicator is equivalent to a neural network index, a sub-neural network indicator is equivalent to a sub-neural network index, and a neural network layer indicator is equivalent to a neural network layer index.

In the present disclosure, an identifier (ID) is used to identify the sequence number, e.g., an index, of a thing, such as an index corresponding to a reference signal resource, a reference signal resource group, a reference signal resource configuration, a channel state information (CSI) report, a CSI report set, a terminal, a base station, a panel, a neural network, a sub-neural network, a neural network layer, etc.

In the present disclosure, a reference signal includes but is not limited to a positioning reference signal (PRS), a sounding reference signal (SRS) and a channel-state information reference signal (CSI-RS).

In one embodiment, artificial intelligence (Al) includes self-learning devices such as machine learning (ML), deep learning, reinforcement learning, transfer learning, deep reinforcement learning and meta learning. In one embodiment, artificial intelligence is implemented by means of an artificial intelligence network (or referred to as a neural network); the neural network comprises a plurality of layers, and each layer comprises at least one node. In one embodiment, the neural network comprises an input layer, an output layer, and at least one hidden layer. Each layer of the neural network comprises, but is not limited to, at least one of a fully-connected layer, a dense layer, a convolutional layer, a transposed convolutional layer, a directly-connected layer, an activation function, a normalizing layer, and a pooling layer.

In one embodiment, each layer of the neural network may comprise a sub-neural network, such as a residual network block, a densenet block and a recurrent network (RNN). The neural network includes a network model and/or network parameters corresponding to the network model. A network model defines the architecture of a network, such as the number of layers of a neural network, the size of each layer, an activation function, a link condition, the size of a convolution kernel, the stride of a convolution, the type of convolution (e.g., 1D convolution, 2D convolution, 3D convolution, dilated convolution, transpose convolution, separable convolution, group convolution, expanded convolution, etc. ), and network parameters are the weight value and/or bias of each layer of the network in the network model and their values. One network model may correspond to a plurality of different network parameter values to adapt to different scenarios. The values of the network parameters may be obtained by means of off-line training and/or on-line training. One neural network model may take values corresponding to a plurality of different neural network parameters. In some embodiments or examples, the neural network parameters may also be referred to as network parameters or neural network model parameters, i.e., neural network parameters and network parameters, and neural network model parameters are interchangeable concepts.

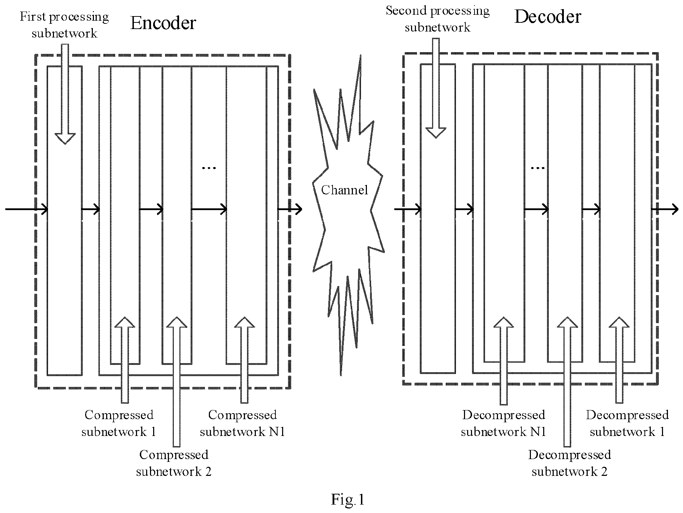

In one embodiment, the CSI feedback is performed with Al, typically the CSI is fed back with AI on the basis of an encoder and decoder as shown in Fig. 1, with the encoder at the terminal and the decoder at the base station side. A terminal compresses an obtained channel H by means of an encoder, and feeds back the compressed channel H1 to a base station; and the base station receives H1, and decompresses H1 by means of a decompression module of the decoder, so as to obtain a recovery value of H, which is recorded as H'.

That is, the CSI feedback needs to pass through the encoder and the decoder which are located in different entities respectively. At the terminal, although it knows the accurate channel H before compression, but it does not know H' after CSI decompression, so it cannot know whether the network has deteriorated; however, the base station can obtain H' but does not know the channel H before compression, similarly, it cannot know the quality of the network. A method needs to be used to determine the quality of the network, that is, a method is needed to determine whether the parameters corresponding to a neural network are adaptive to the current channel scenario or to the CSI reflecting the current channel scenario. The quality of the network is used to determine whether the network parameters need to be updated for using a new network model, or whether to fall back to traditional non-A! methods to obtain and feed back CSI.

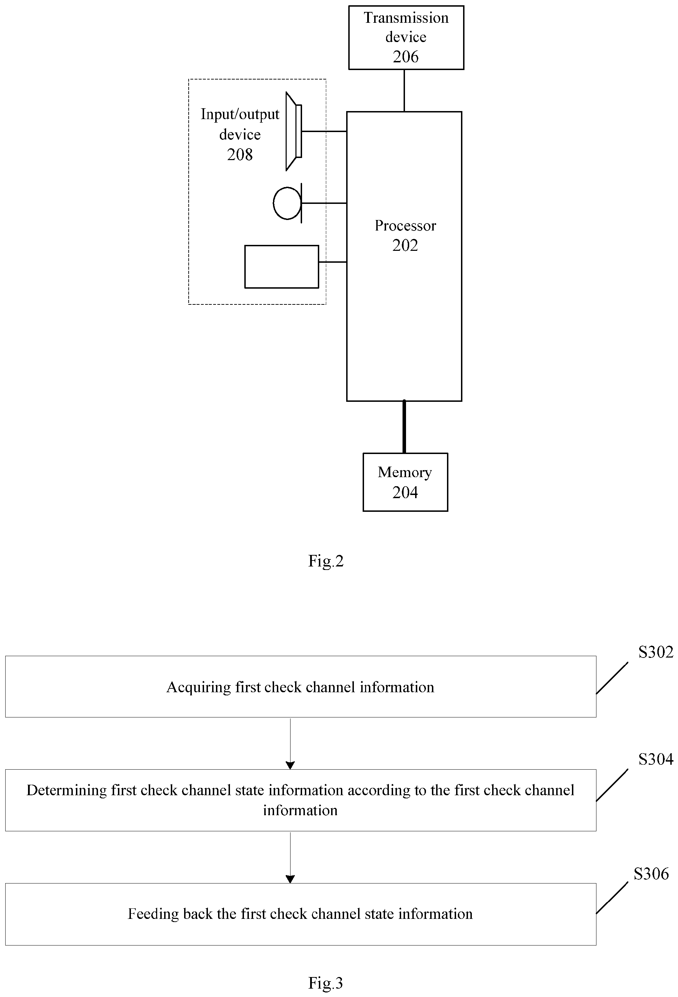

The method embodiments provided in the embodiments of the present disclosure can be executed in a computer terminal or a similar computing device. Taking running on a computer terminal as an example, Fig. 2 is a hardware structure block diagram of a computer terminal of a method for feeding back channel state information according to an embodiment of the present disclosure. As shown in Fig. 2, the computer terminal may include one or more (only one is shown in Fig. 2) processors 202 (the processors 202 may include, but are not limited to, a microprocessor unit (MPU) or a programmable logic device (PLD)) and a memory 204 configured to store data. In one exemplary embodiment, the computer terminal may further include a transmission device 206 configured as a communication function and an input/output device 208. Those ordinarily skilled in the art can appreciate that the structure shown in Fig. 2 is for illustrative purposes only, but not limit the structure of the computer terminal. For example, the computer terminal may further include more or fewer components than those shown in Fig. 2, or has a different configuration with equivalent or more functions than those shown in Fig. 2.

The memory 204 may be configured to store a computer program, for example, a software program and a module of application software, such as a computer program corresponding to the method for feeding back channel state information in the embodiments of the present disclosure. The processor 202 runs the computer program stored in the memory 204, so as to execute various function applications and data processing, that is, to implement the foregoing method. The memory 204 may include a high-speed random access memory, and may also include a non-transitory memory, such as one or more magnetic storage apparatuses, flash memories, or other non-transitory solid-state memories. In some instances, the memory 204 may further include a memory remotely located from the processor 202, and the remote memory may be connected to the computer terminal by a network. Examples of the network above includes, but is not limited to, an Internet, intranets, a local area network, a mobile communication network, and combinations thereof.

The transmission device 206 is configured to receive or transmit data by a network. Specific examples of the network may include a wireless network provided by a communication provider of the computer terminal. In one example, the transmission device 206 includes a network interface controller (NIC) which may be connected to other network devices by means of a base station, thereby being able to communicate with the Internet. In one example, the transmission device 206 may be a radio frequency (RF) module for communicating wirelessly with the Internet.

Fig. 3 is a flowchart of a method for feeding back channel state information according to an embodiment of the present disclosure. As shown in Fig. 3, the method comprises the following steps:
step S302, acquiring first check channel information;
step S304, feeding back the first check channel state information; and
step S306, determining first check channel state information according to the first check channel information.

According to the embodiments of the present disclosure, by acquiring first check channel information; determining first check channel state information according to the first check channel information; and feeding back the first check channel state information, the problem of how to determine the quality of a neural network is at least solved, thereby further acquiring more accurate channel state information.

In one exemplary embodiment, the first check channel information is acquired by one of the following methods: acquiring the first check channel information according to received first signaling; and acquiring the first check channel information according to an agreed method.

In one exemplary embodiment, in order to better understand how to acquire the first check channel information in step S302, the first check channel information may be determined according to the first check data and the first channel information.

In one exemplary embodiment, in order to better understand how to determine the first check channel information according to the first check data and the first channel information in step S304, the first check data and the first channel information may be combined at a specified position to obtain the first check channel information.

It should be noted that, the meaning of combination includes one of the following: associating/combining/connecting the first check data with the first channel information at a specified position, to obtain the first check channel information; or inserting/incorporating the first check data into the first channel information at a specified position, to obtain the first check channel information; or inserting/incorporating the first channel information into the first check data at a specified position, to obtain the first check channel information.

In one exemplary embodiment, the specified position at least comprises one of the following: an agreed first position, a second position acquired according to received second signaling, and a starting and ending position of an array, wherein the first position and the second position comprise one of the following: an index value of an array in a k-th dimension, a start index of the array in the k-th dimension, an end index of the array in the k-th dimension, and an index length of the array in the k-th dimension, wherein the array is an array corresponding to at least one of the first check data, the first channel information and the first check channel information, and k is a positive integer, and preferably, k may comprise one of 1, 2, 3 and 4.

In one exemplary embodiment, the specified position at least comprises one of the following: positions corresponding to equally-spaced L index values with a starting point being p, and positions corresponding to L successive index values with the starting point being p, wherein p is an index value of a k-th dimension of an array corresponding to the first check channel information, p is a positive integer, L is the length of the k-th dimension of the first check data, and k is a positive integer, and preferably, k may comprise one of 1, 2, 3 and 4.

In one exemplary embodiment, p comprises at least one of the following: a non-negative integer less than N-L, 0,1, N-L, and floor(N/2), wherein N is the length of the k-th dimension of the array corresponding to the first check channel information, L is the length of the k-th dimension of the first check data, k is a positive integer, and floor represents a rounding function.

In one exemplary embodiment, combining the first check data and the first channel information at a specified position, to obtain the first check channel information comprises: determining an array corresponding to the first check channel information; inserting the first check data at the specified position of the array; or determining an array corresponding to the first check channel information; and inserting the first channel information at the specified position of the array.

In an optional embodiment, the first check data may be incorporated before the kth dimension of the first channel information; the first check data is incorporated after the kth dimension of the first channel information; the first check data is incorporated in the middle of the kth dimension of the first channel information; the first check data is incorporated into two sides of the kth dimension of the first channel information; the first check data is incorporated at equally-spaced positions of the kth dimension of the first channel information, 0 ≤ k ≤ N; and N is a positive integer, representing the dimension of the channel information.

In one exemplary embodiment, a plurality of technical solutions for combining the first check data and the first channel information at a specified position to obtain the first check channel information are provided, comprising: determining an array corresponding to the first check channel information, determining a starting point p of a k-th dimension of the array, determining positions corresponding to successive L index values starting from the starting point p of the k-th dimension, and inserting the first check data at the positions corresponding to the successive L index values; determining an array corresponding to the first check channel information, determining a starting point p of the k-th dimension, determining positions corresponding to equally-spaced L index values starting from the starting point p of the k-th dimension, and inserting the first check data at the positions corresponding to the equally-spaced L index values, wherein L is the length of the first check data.

In one exemplary embodiment, the first check data comprises an agreed constant array or a known sequence array.

In one exemplary embodiment, further provided is a technical solution, specifically comprising: determining, according to received third signaling, that the first check data is a subset of the first channel information, wherein the subset comprises a frequency domain subset and/or a time domain subset of the first channel information.

In one exemplary embodiment, the third signaling is used for determining a grouping manner of the first channel information, and determining the first check data according to the grouping manner, wherein the grouping manner comprises overlapped grouping and non-overlapped grouping.

In one exemplary embodiment, the first check data is a mapping of a subset of the first channel information.

In one exemplary embodiment, the first check channel information only includes the first check data.

In one exemplary embodiment, provided is a technical solution of determining first check channel state information according to the first check channel information, comprising: determining the first check channel state information according to the first check channel information and a first neural network model. Optionally, the first check channel information may be input into a first neural network model to acquire first check channel state information outputted by the first neural network model.

In one example, the first neural network model is a neural network model corresponding to an encoder.

In one exemplary embodiment, to better understand how to feed back the first check channel state information in step S306, the first check channel state information may be fed back according to a specified report configuration category.

In one exemplary embodiment, a network quality identifier is determined according to the first check channel information and the first check channel state information; and the network quality identifier is fed back. Optionally, a network quality identifier can be determined according to first check channel information and first check channel state information, wherein the network quality identifier is at least used for evaluating the applicability capability of a first neural network model, i.e. whether the first neural network model can adapt to a current channel environment or has caused the performance to not satisfy actual requirements; and if the network quality identifier indicates that the first neural network cannot adapt to the current channel environment or has caused the performance to not satisfy actual requirements, it is necessary to update the parameters of the first neural network or switch to a traditional non-artificial intelligence solution. Further, the network quality identifier needs to be fed back to notify a base station to send a reference signal used for training first neural network parameters or notify the base station that the terminal has used a non-artificial intelligence solution.

For example, in an example, the first check channel information comprises first check data information, and the first neural network is used for performing channel estimation according to the first check channel information, i.e. estimating H1 for a channel H0 corresponding to the first check channel information, generally speaking, if an array corresponding to H1 is greater than H0, H0 can be considered to be a channel corresponding to a reference signal, and H1 can be considered to be a channel corresponding to a reference signal and data. The network quality identifier is obtained according to the first check data H0' and the channel subset H1' of H1 on the specified position. For example, the similarity or distance between H0' and H1' is calculated to determine the network quality identifier.

For example, in an example, the first check channel information at least comprises first check data; the first neural network is used for performing beam prediction according to the first check channel information, i.e. predicting beam parameter information B1 of a larger scale according to beam parameter information B0 of the first check channel information; generally speaking, an array corresponding to B1 is larger than B0, 80 can be considered as beam parameter information corresponding to L0 beams, and B1 can be considered as beam parameter information corresponding to L1 beams, L0 and L1 are positive integers; and L1>L0. The network quality identifier is obtained according to the first check data B0' and the subset B1' of the B1 at the specified position. For example, the similarity or distance between 80' and B1' is calculated to determine the network quality identifier. Here, the beam parameter information comprises at least one of the following: an angle of arrival (AOA), an angle of departure (AOD), a Zenith angle of Departure (ZOD), a Zenith angle of Arrival (ZOA), a beam index, a reference signal receiving power (RSRP), a reference signal receiving quality (RSRQ), an L1-signal-to-interference-plus-noise ratio (L1-SINR), etc.

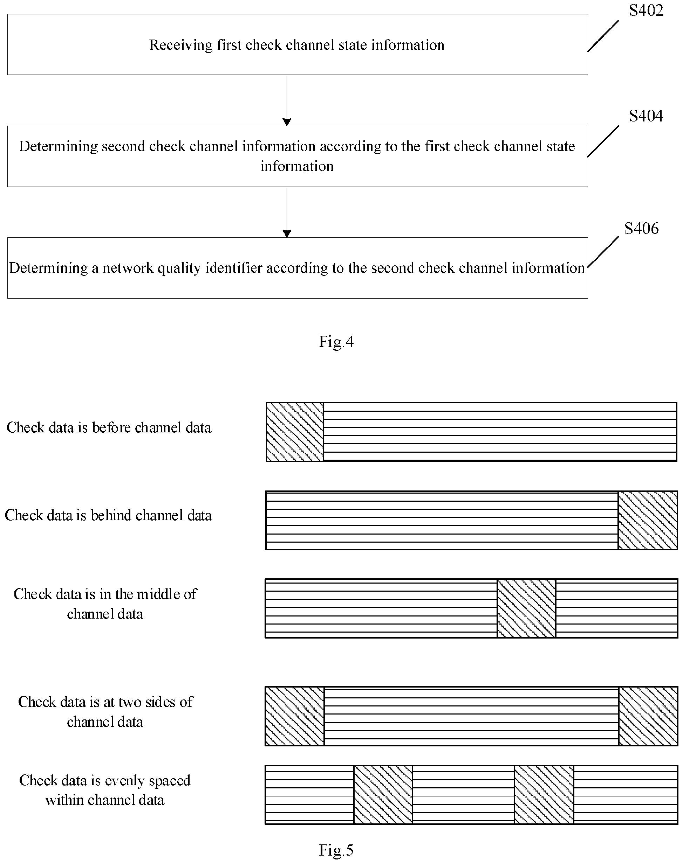

Fig. 4 is a flowchart of a method for receiving channel state information according to an embodiment of the present disclosure. As shown in Fig. 4, the steps of the method comprise:
step S402, receiving first check channel state information;
wherein the first check channel state information may be determined according to first check channel information;
step S404, determining second check channel information according to the first check channel state information;
wherein the second check channel information may include second check data and second channel information;
step S406, determining a network quality identifier according to the second check channel information.

In the embodiments of the present disclosure, by receiving first check channel state information, determining second check channel information according to the first check channel state information, and determining a network quality identifier according to the second check channel information, the problem of how to determine the quality of a neural network is solved, thereby further acquiring more accurate channel state information.

In one exemplary embodiment, in order to better understand how to acquire the first check channel information in step S402, the first check channel information may be determined according to the first check data and the first channel information.

In one exemplary embodiment, in order to better understand how to determine the first check channel information according to the first check data and the first channel information in step S404, the first check data and the first channel information may be combined at a specified position to obtain the first check channel information.

In one exemplary embodiment, the specified position at least comprises one of the following: an agreed first position, a second position acquired according to received second signaling, and a starting and ending position of an array, wherein the first position and the second position comprise one of the following: an index value of an array in a k-th dimension, a start index of the array in the k-th dimension, an end index of the array in the k-th dimension, and an index length of the array in the k-th dimension, wherein the array is an array corresponding to at least one of the first check data, the first channel information and the first check channel information, and k is a positive integer, and preferably, k may comprise one of 1, 2, 3 and 4.

In one exemplary embodiment, the specified position at least comprises one of the following: positions corresponding to equally-spaced L index values with a starting point being p, and positions corresponding to L successive index values with the starting point being p, wherein p is an index value of a k-th dimension of an array corresponding to the first check channel information, p is a positive integer, L is the length of the k-th dimension of the first check data, and k is a positive integer, and preferably, k may comprise one of 1, 2, 3 and 4.

In one exemplary embodiment, p comprises at least one of the following: a non-negative integer less than N-L, 0,1, N-L, and floor(N/2), wherein N is the length of the k-th dimension of the array corresponding to the first check channel information, L is the length of the k-th dimension of the first check data, k is a positive integer, and floor represents a rounding function.

It should be noted that k may include positive integers less than or equal to 4.

In one exemplary embodiment, a plurality of technical solutions for combining the first check data and the first channel information at a specified position to obtain the first check channel information are proposed, comprising: determining an array corresponding to the first check channel information, determining a starting point p of a k-th dimension of the array, determining positions corresponding to successive L index values starting from the starting point p of the k-th dimension, and inserting the first check data at the positions corresponding to the successive L index values; determining an array corresponding to the first check channel information, determining a starting point p of the k-th dimension, determining positions corresponding to equally-spaced L index values starting from the starting point p of the k-th dimension, and inserting the first check data at the positions corresponding to the equally-spaced L index values, wherein L is the length of the first check data.

In one exemplary embodiment, for better understanding how to receive the first check channel state information in step S402, the first check channel state information is received according to the specified report configuration category.

In one exemplary embodiment, further provided is a technical solution, specifically comprising: transmitting third signaling, wherein the third signaling is used for determining a subset of first channel information, and comprises: according to the third signaling, determining that first check data is a frequency domain subset and/or a time domain subset of the first channel information.

In one exemplary embodiment, the third signaling is used for determining a grouping manner of the first channel information, and determining the first check data according to the grouping manner, wherein the grouping manner comprises overlapped grouping and non-overlapped grouping.

In one exemplary embodiment, provided is a method for determining second check channel information according to the first check channel state information, comprising: determining second check channel information according to the first check channel state information and a second neural network model. Optionally, the first check channel state information is input into a second neural network model, and second check channel information outputted by the second neural network model is acquired. In one example, the second neural network model is a neural network model corresponding to a decoder.

In one exemplary embodiment, the second check channel information includes second check data and second channel information.

In one exemplary embodiment, in the process of determining the network quality identifier according to the second check channel information, the second check data may also be acquired from the specified position of the second check channel information; and the network quality identifier is determined according to the first check data and the second check data.

In one exemplary embodiment, after the network quality identifier is determined according to the first check data and the second check data, a feedback category of the channel state information may be further determined according to the network quality identifier, or the network parameters of a second neural network model are updated, or the network parameters of a first neural network model are updated.

In one exemplary embodiment, the process of determining a feedback category of channel state information according to the network quality identifier to update the network parameters of the first neural network model includes: transmitting the network quality identifier to a terminal by a base station, and updating the network parameters of the first neural network model by the terminal according to the network quality identifier.

In one exemplary embodiment, the technical solution of transmitting a reference signal according to a designated resource category can also be implemented, wherein the reference signal is used for acquiring the first check channel information.

From the description of the described embodiments, a person skilled in the art would have been able to clearly understand that the method in the described embodiments may be implemented by using software and necessary general hardware platforms, and of course may also be implemented using hardware, but in many cases, the former is a better embodiment. Based on such understanding, the essence of technical solution of the embodiments of the present disclosure, or in other words, the part of the technical solutions making contributions to the prior art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present disclosure.

The present embodiment further provides an apparatus for feeding back channel state information, the apparatus is used for implementing the embodiments and preferred embodiments above, and what has been described will not be described repeatedly here. As used below, the term "module" may implement a combination of software and/or hardware of predetermined functions. Although the device described in the following embodiments is preferably implemented in software, implementation in hardware or a combination of software and hardware is also possible and conceived.

The method for feeding back channel state information is further described in conjunction with the following embodiments.

In one embodiment, a base station is required to configure N first neural networks to a terminal, wherein the N first neural networks comprise N neural network models, the N neural networks correspond to the values of M sets of neural network parameters, some of the neural network models correspond to the values of one set of neural network parameters, and some of the neural networks correspond to the values of more than one set of neural network parameters, wherein N and M are positive integers, and N is less than or equal to M. In one embodiment, such as CSI feedback, the entire neural network is divided into two sub-neural networks: an encoder and a decoder, wherein the encoder is located at a terminal and is configured to compress channel information, and the decoder is located at a base station and is configured to decompress the channel state information outputted by the encoder, so as to recover the channel information.

In one embodiment, the base station sends the N neural networks to the terminal by means of first high-layer signaling, such as first RRC signaling. The first high-layer signaling will only be transmitted once as required when the terminal is powered on or switched from the inactive state to the active state, and certainly, the terminal may trigger the base station to transmit once as required. In this way, the base station and the terminal both have network models and network parameter values of the N neural networks, and are respectively stored in their own storage modules. In one embodiment, the N neural networks are transmitted to the terminal by means of a plurality of first high-layer signaling, and in one embodiment, a plurality of sub-neural networks of one neural network in the N neural networks are transmitted to the terminal by means of the plurality of first high-layer signaling.

In one embodiment, the N neural networks have an index, and each neural network, and if each neural network has sub-neural networks, then the neural network corresponds to an index of a group of sub-neural networks. The indexes of the N neural networks and the indexes of the sub-neural networks may be transmitted using second high-layer signaling. The second high-layer signaling may be RRC signaling or MAC CE signaling, and is mainly used for selecting K indexes from N neural network indexes and sending same to a terminal.

In one embodiment, the network quality identifier may be acquired by the base station by means of the check channel state information fed back by the terminal, or may be acquired by the terminal by means of the check channel state information and then fed back to the base station.

In one embodiment, when the network quality identifier takes a first value, the first-type codebook is selected to be used, and the first-type codebook is used to feed back the channel state information. When the network quality identifier takes a second value, a second-type codebook is selected to be used, and the second-type codebook is used to feed back the channel state information.

In one embodiment, the first value of the network quality identifier is 0 or FALSE, and the second value of the network parameter is a non-zero value or True, such as 1. In an example, the first value of the network quality identifier is a non-zero value or True, such as 1, and the second value of the network parameter is 0 or FALSE.

In one embodiment, the terminal has obtained N neural networks by receiving first high-layer signaling, and stores the N neural network in a local storage device. In order to realize a new function or adapt to a change condition of a new wireless channel, the base station needs to determine, according to a network quality identifier, whether a neural network needs to be updated, which comprises but is not limited to selecting a model of the neural network or updating the network parameter value of an original neural network model.

In one embodiment, the value of the network parameter is updated by means of online learning, and before this process, the terminal may need to trigger, in an aperiodic manner, the base station to send a pilot for training the network parameters.

In one embodiment, the network parameter values are updated by receiving the network parameter values transmitted by the base station, and before this process, the terminal may need to trigger the base station to transmit the network parameters.

In one embodiment, the codebook types in channel state information comprise a first-type codebook and a second-type codebook, the first-type codebook can be a codebook mapped on the basis of a neural network, for example, pre-encoding information obtained after compressing initial channel state information an encoder at a terminal side by means of a neural network or an artificial intelligence network or machine learning. The second-type codebook is based on a currently common codebook constructed based on discrete Fourier vectors, such as a type I codebook, a type II codebook and an etype II codebook in the NR, and various types of codebooks based on discrete Fourier vectors defined in the LTE. In order to realize a new function or adapt to a change condition of a new radio channel, a base station needs to instruct, according to a network quality identifier, a terminal to select a codebook type.

In some examples, a terminal acquires first check channel information, inputs the first check channel information into an artificial intelligence encoder, outputs first check channel state information, and feeds back the first check channel state information. The base station receives the first check channel state information fed back by the terminal, inputs it into a decoder of the artificial intelligence, outputs second check channel information, and determines a network quality identifier according to the second check information.

In one embodiment, an artificial intelligence network (CSI artificial intelligence network) for CSI feedback includes a terminal side encoder and a base station side decoder. In one embodiment, an encoder and a decoder of a CSI artificial intelligence network perform end-to-end training to obtain the values of network parameters.

In one embodiment, the network parameters of the encoder and decoder of the CSI artificial intelligence network may be trained together and deployed off-line, or downloaded from a base station or third party server as required.

In one embodiment, the encoder and decoder of the CSI artificial intelligence network may appear in pairs and may be indicated by an encoder-decoder index (or a CSI artificial intelligence network index). The terminal may select an encoder suitable for itself according to the CSI intelligent network index transmitted by the base station. The terminal may feed back the CSI intelligent network index, and the base station selects a decoder suitable for itself according to the CSI intelligent network index fed back by the terminal.

In one embodiment, first check channel information comprises first check data and first channel information.

In one embodiment, first check channel information includes only the first check data.

In one embodiment, second check channel information comprises second check data and second channel information.

In one embodiment, second check channel information includes only second check data.

In one embodiment, the second check data is a recovery value, an estimation value, a mapping value or a calculation value of the first check data.

In one embodiment, second channel information is a recovery value, an estimation value, a mapping value or a calculation value of the first channel information.

In one embodiment, the terminal periodically acquires the first check channel information, for example, periodically acquires the first check channel information after receiving the higher-layer and/or physical-layer signaling configured by the base station.

In one embodiment, the terminal aperiodically acquires the first check channel information, for example, dynamically acquires the first check channel information after receiving the higher-layer and/or physical-layer signaling configured by the base station.

In one embodiment, the terminal semi-persistently acquires the first check channel information, for example, dynamically acquires the first check channel information after receiving the higher-layer and/or physical-layer signaling configured by the base station.

In one embodiment, a channel state information report type (report Config Type) configured by a base station is received to feed back the first check channel state information, wherein the channel state information report type comprises, but is not limited to, periodic, semi-persistent and aperiodic. That is to say, the terminal feeds back the first check channel state information periodically upon reception of high-layer and/or physical-layer signaling configured by the base station.

In one embodiment, a terminal feeds back first check channel state information aperiodically upon reception of high-layer and/or physical-layer signaling configured by a base station.

In one embodiment, a terminal feeds back first check channel state information semi-persistently upon reception of high-layer and/or physical-layer signaling configured by a base station.

In one embodiment, a base station configures or transmits high-layer and/or physical-layer signaling for instructing a terminal to acquire a time-domain characteristic of a first check channel, for example, in one embodiment, instructing the terminal to periodically acquire first check channel information.

In one embodiment, a terminal is instructed to aperiodically obtain first check channel information; in one embodiment, the terminal is instructed to semi-persistently obtain the first check channel information.

In one embodiment, a base station configures or transmits high-layer and/or physical-layer signaling for instructing a terminal to feed back a channel state information report type (report config Type) of first check channel state information, so as to instruct the terminal to feed back time domain characteristics of the first check channel state information, wherein the channel state information report type includes but is not limited to periodic, semi-persistent and aperiodic.

That is to say, in one embodiment, the terminal is instructed to periodically feed back first check channel state information.

In one embodiment, the terminal is instructed to aperiodically feed back first check channel state information.

In one embodiment, the terminal is instructed to semi-persistently feed back first check channel state information.

In one embodiment, a base station and a terminal obtain first check channel information as agreed.

In one embodiment, a terminal and a base station agree that the first check data of the first check channel information is a constant array, for example, a constant array A consisting entirely of the value c, where c can be 1, or 0, or a constant greater than 0 and less than 1, or a constant within the range from greater than -0.5 to 0.5, or a constant that satisfies a normal distribution.

In one embodiment, a terminal and a base station agree that first check data of first check channel information is a known array A, wherein each element may be a real number or a complex number, or each element is a normalized real number or complex number.

In one embodiment, a terminal and a base station agree that first check data of first check channel information is a frequency-domain subset of first channel information of first check channel information, for example, a base station and a terminal agree that the first channel information is divided into at least one subband group in a frequency domain, wherein each subband group comprises more than one physical resource block (PRB), and there is at least one repeated subband or PRB between at least two subbands. The repeated portion is the first check data.

In one embodiment, a terminal and a base station agree that first check data of first check channel information is a time-domain subset of the first channel information of the first check channel information, for example, a base station and a terminal agree that a subset of channel state information acquired at a specified time is first check data.

In one embodiment, a terminal and a base station agree that first check data of first check channel information is a mapping of a frequency-domain subset of first channel information of the first check channel information, the mapping comprising at least one of the following: linear transformation, discrete Fourier transformation, Fourier transformation, Inverse Discrete Fourier Transform (IDFT), an Inverse Fourier transformation or other functional mapping, and non-linear mapping. The check data is an array of N1*N2 or N1*N2*C, wherein N1, N2, and C are positive integers, C is the number of channels, and N1 and N2 are numbers of antennas or the dimensions of channel lengths.

In one embodiment, a base station sends first signaling, a terminal receives the first signaling, and the first signaling comprises high-layer and/or physical layer signaling. The terminal acquires the first check channel information according to the received first signaling.

In one embodiment, a base station and a terminal agree on a combination mode of the first check data and the first channel information.

In one embodiment, a base station transmits second signaling to indicate a combination mode of first check data and first channel information. A terminal receives the second signaling, and acquires the combination mode of the first check data and the first channel information according to the second signaling, wherein the second signaling may be a high-layer signaling and/or physical-layer signaling.

In one embodiment, a combination mode of first check data and first channel information (equivalent to the channel data in Fig. 4) is described in conjunction with Fig. 5, and the combination mode of the first check data and the first channel information comprises one of the following: inserting an array corresponding to the first check data into an array corresponding to the first channel information at a first specified position; incorporating an array corresponding to the first check data into an array corresponding to the first channel information at a first specified position; and merging or combining an array corresponding to the first check data with an array corresponding to the first channel information at a first specified position.

In one embodiment, a base station and a terminal obtain the first specified position by means of an agreement.

In one embodiment, a base station transmits fourth signaling information which indicates a first specified position. The terminal receives the fourth signaling information to obtain the first specified position. The fourth signaling is higher-layer signaling and/or physical layer signaling.

In one embodiment, a base station and a terminal agree on a combination mode of second check data and second channel information.

In one embodiment, a base station determines the combination mode of second check data and second channel information according to second signalling configured, and the second signaling may be higher-layer signaling and/or physical layer signaling.

In one embodiment, the combination mode of the second check data and the second channel information comprises one of the following: inserting an array corresponding to the second check data into an array corresponding to the second channel information at a second specified position; incorporating an array corresponding to the second check data into an array corresponding to the second channel information at a second specified position; and merging or combining an array corresponding to the second check data with an array corresponding to the second channel information at a second specified position.

In one embodiment, a base station and a terminal obtain the second specified position by means of an agreement.

In one embodiment, a base station obtains a second specified position according to configured fourth signaling. The fourth signaling is higher-layer signaling and/or physical layer signaling.

In one embodiment, a first specified position and a second specified position have the same value.

In one embodiment, the first specified position or the second specified position comprises one of the following: an ith index of a kth dimension of an array; and an ith index and a jth index of a kth dimension of an array, where i, j = 1, 2,..., Nk, i is not equal to j, Nk is the length of the kth dimension, and k is a positive integer, such as 1, 2 and 3. The array is an array corresponding to at least one of first check data, first channel information and first check channel information, or the array is an array corresponding to at least one of second check data, second channel information, and second check channel information.

In one embodiment, it is assumed that the array corresponding to the first channel information on each channel is A which is an array of N1*N2, and the array corresponding to the first check data on each channel is B which is an array of M1*M2.

In an optional embodiment, the first specified position is the first index of the first dimension of the channel data, and then the first check channel information is C=[B, A], that is, the nth row of B is inserted before the nth row of A, and in this case, N1=M1, and n=1,... , N1.

In an optional embodiment, the first specified position is the N1th index of the first dimension of the channel data, and then the first check channel information is C=[A, B], that is, the nth row of B is inserted behind the nth row of A, and in this case, N1=M1, and n=1,... , N1.

In an optional embodiment, the first specified position is the first index of the first dimension of the channel data, and then the first check channel information C=[A[1 :i,:], B,A[1+i,N1,:]], that is, the nth row of B is inserted between columns (i+1)th and (i+M1)th of the nth row of A, and in this case, N1=M1, and n=1,... , N1.

In an optional embodiment, the first specified position is the first index of the second dimension of the channel data, and then the first check channel information C=[B; A], that is, the nth column of B is inserted above the nth column of A, and in this case, N2=M2, and n=1,..., N2.

In an optional embodiment, the first specified position is the N2th index of the second dimension of the channel data, and then the first check channel information C=[A; B], that is, the nth column of B is inserted below the nth column of A, and in this case, N2=M2, and n=1,... , N2. In an optional embodiment, the first specified position is an ith index of a second dimension of the channel data, and then the first check channel information C=[A[1: i,:]; B; A[1+i, N1,:]], the nth row of B is inserted between columns (i+1)th and (i+M1)th of the nth row of A, and in this case N2=M2, and n=1,..., N2.

Likewise, B can be divided into two groups which are respectively inserted into two rows or two columns starting at positions i and j.

Likewise, in a mode similar to that of the terminal, the base station may determine a combination mode of the second check data and the second channel information with reference to Fig. 4, wherein the combination mode is a mode of combining the second check data with the second channel information at the second specified position.

In an optional embodiment, as the first check data is known, the base station may obtain the first check data, and obtain the network quality identifier from the first check data and the second check data.

In one embodiment, a distance d between the first check data and the second check data is calculated, wherein the distance refers to a distance between two matrices or a distance between two vectors. When d is less than a configured threshold, it is considered that the neural network can well feed back the channel state information, and the network quality identifier takes a first value; otherwise, the network quality identifier takes a second value.

In one embodiment, a similarity degree s between the first check data and the second check data is calculated, wherein the similarity degree herein refers to a degree of similarity between two matrices or a correlation between two vectors. When s is greater than a configured threshold, it is considered that the neural network can feed back channel state information well, and the network quality identifier takes a first value; otherwise, the network quality identifier takes a second value.

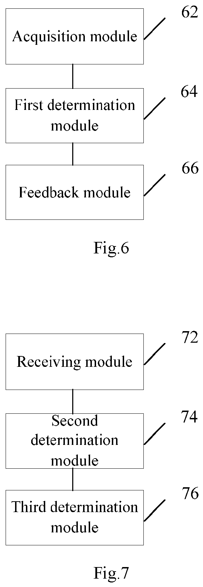

Fig. 6 is a structural block diagram of a device for feeding back channel state information according to an embodiment of the present disclosure. As shown in Fig. 6, the apparatus for feeding back channel state information includes:
an acquisition module 62, configured to acquire first check channel information;
a first determination module 64, configured to determine first check channel state information according to the first check channel information; and
a feedback module 66, configured to feed back the first check channel state information.

By means of the apparatus, by acquiring first check channel information; determining first check channel state information according to the first check channel information; and feeding back the first check channel state information, the problem of how to determine the quality of a neural network is at least solved, thereby further acquiring more accurate channel state information.

In one exemplary embodiment, the first check channel information is acquired by one of the following methods: acquiring the first check channel information according to received first signaling; and acquiring the first check channel information according to an agreed method.

In one exemplary embodiment, the acquisition module is further configured to determine the first check channel information according to the first check data and the first channel information.

In one exemplary embodiment, the first determination module is further configured to combine the first check data with the first channel information at a specified position, to obtain the first check channel information.

It should be noted that, the meaning of combination includes associating/combining/connecting the first check data with the first channel information at a specified position, to obtain the first check channel information; or inserting/incorporating the first check data into the first channel information at a specified position, to obtain the first check channel information; or inserting/incorporating the first channel information into the first check data at a specified position, to obtain the first check channel information.

In one exemplary embodiment, the specified position at least comprises one of the following: an agreed first position, a second position acquired according to received second signaling, and a starting and ending position of an array, wherein the first position and the second position comprise one of the following: an index value of an array in a k-th dimension, a start index of the array in the k-th dimension, an end index of the array in the k-th dimension, and an index length of the array in the k-th dimension, wherein the array is an array corresponding to at least one of the first check data, the first channel information and the first check channel information, and k is a positive integer.

In one exemplary embodiment, the specified position at least comprises one of the following: positions corresponding to L index values at equal intervals with a starting point being p, and positions corresponding to L successive index values with the starting point being p, wherein p is an index value of a k-th dimension of an array corresponding to the first check channel information, p is a positive integer, L is the length of the k-th dimension of the first check data, and k is a positive integer.

In one exemplary embodiment, p comprises at least one of the following: a non-negative integer less than N-L, 0,1, N-L, and floor(N/2), wherein N is the length of the k-th dimension of the array corresponding to the first check channel information, L is the length of the k-th dimension of the first check data, k is a positive integer, and floor represents a rounding function.

In one exemplary embodiment, combining the first check data and the first channel information at a specified position, to obtain the first check channel information comprises: determining an array corresponding to the first check channel information; inserting the first check data at the specified position of the array.

In an optional embodiment, the first check data may be incorporated before the channel information in the k-th dimension; the first check data is incorporated after the channel information in the k-th dimension; the first check data is incorporated between the channel information in the k-th dimension; the first check data is incorporated on both sides of the channel information in the k-th dimension; the first check data is incorporated at an equally-spaced position of the channel information in the k-th dimension, where 0 ≤ k ≤ N, and N is a positive integer indicating a dimension of the channel information.

In one exemplary embodiment, the acquisition module is further configured to determine an array corresponding to the first check channel information, determine a starting point p of a k-th dimension of the array, determine positions corresponding to continuous L index values starting from the starting point p of the k-th dimension, and insert the first check data at the positions corresponding to the continuous L index values; determine the array corresponding to the first check channel information, determine the starting point p of the k-th dimension, determine positions corresponding to equally-spaced L index values starting from the starting point p of the k-th dimension, and insert the first check data at the positions corresponding to the equally-spaced L index values, where L is the length of the first check data.

In one exemplary embodiment, the first check data comprises an agreed constant array or a known sequence array.

In one exemplary embodiment, the apparatus further comprises a fourth determination module, configured to determine, according to received third signaling, that the first check data is a subset of the first channel information, wherein the subset comprises a frequency domain subset and/or a time domain subset of the first channel information.

In one exemplary embodiment, the third signaling is used for determining a grouping manner of the first channel information, and determining the first check data according to the grouping manner, wherein the grouping manner comprises overlapped grouping and non-overlapped grouping.

In one exemplary embodiment, the first check data is a mapping of a subset of the first channel information.

In one exemplary embodiment, the first determination module is further configured to determine the first check channel state information according to the first check channel information and a first neural network model. Optionally, the first check channel information may be input into a first neural network model to acquire first check channel state information outputted by the first neural network model.

In one exemplary embodiment, the feedback module is further configured to feed back the first check channel state information according to a designated report configuration category.

In one exemplary embodiment, the apparatus further comprises a network quality identifier feedback module configured to determine a network quality identifier according to the first check channel information and the first check channel state information; and feed back the network quality identifier.

Fig. 7 is a structural block diagram of an apparatus for receiving channel state information according to an embodiment of the present disclosure. As shown in Fig. 7, the apparatus for receiving channel state information includes:
a receiving module 72, configured to receive first check channel state information;
a second determination module 74, configured to determine second check channel information according to the first check channel state information; and
a third determination module 76, configured to determine a network quality identifier according to the second check channel information.

By means of the apparatus, by receiving first check channel state information, determining second check channel information according to the first check channel state information, and determining a network quality identifier according to the second check channel information, the problem of how to acquire more accurate channel state information is solved.

In one exemplary embodiment, the receiving module is further configured to determine the first check channel information according to the first check data and the first channel information.

In one exemplary embodiment, the second determination module is further configured to combine the first check data with the first channel information at a specified position, to obtain the first check channel information.

In one exemplary embodiment, the specified position at least comprises one of the following: an agreed first position, a second position acquired according to received second signaling, and a starting and ending position of an array, wherein the first position and the second position comprise one of the following: an index value of an array in a k-th dimension, a start index of the array in the k-th dimension, an end index of the array in the k-th dimension, and an index length of the array in the k-th dimension, wherein the array is an array corresponding to at least one of the first check data, the first channel information and the first check channel information, and k is a positive integer.

In one exemplary embodiment, the specified position at least comprises one of the following: positions corresponding to L index values at equal intervals with a starting point being p, and positions corresponding to L successive index values with the starting point being p, wherein p is an index value of a k-th dimension of an array corresponding to the first check channel information, p is a positive integer, L is the length of the k-th dimension of the first check data, and k is a positive integer.

In one exemplary embodiment, p comprises at least one of the following: a non-negative integer less than N-L, 0,1, N-L, and floor(N/2), wherein N is the length of the k-th dimension of the array corresponding to the first check channel information, L is the length of the k-th dimension of the first check data, k is a positive integer, and floor represents a rounding function.

In one exemplary embodiment, the second determination module is further configured to determine an array corresponding to the first check channel information, determine a starting point p of a k-th dimension of the array, determine positions corresponding to successive L index values starting from the starting point p of the k-th dimension, and insert the first check data at the positions corresponding to the successive L index values; determine an array corresponding to the first check channel information, determine a starting point p of the k-th dimension, determine positions corresponding to equally-spaced L index values starting from the starting point p of the k-th dimension, and insert the first check data at the positions corresponding to the equally-spaced L index values, wherein L is the length of the first check data.

In one exemplary embodiment, the receiving module is further configured to receive the first check channel state information according to a designated report configuration category.

In one exemplary embodiment, the apparatus further comprises: a transmission module, configured to transmit third signaling, wherein the third signaling is used for determining a subset of first channel information, and comprises: according to the third signaling, determining that first check data is a frequency domain subset and/or a time domain subset of the first channel information.

In one exemplary embodiment, the third signaling is used for determining a grouping manner of the first channel information, and determining the first check data according to the grouping manner, wherein the grouping manner comprises overlapped grouping and non-overlapped grouping.

In one exemplary embodiment, the second determination module is further configured to determine the second check channel state information according to the second check channel state information and a first neural network model. Optionally, the first check channel state information is input into a second neural network model, and second check channel information outputted by the second neural network model is acquired.

In one exemplary embodiment, the second check channel information includes second check data and second channel information.

In one exemplary embodiment, the third determination module is further configured to acquire the second check data from the specified position of the second check channel information; and determine the network quality identifier according to the first check data and the second check data.

In one exemplary embodiment, the apparatus further comprises an updating module, configured to determine a feedback category of the channel state information according to the network quality identifier, or update network parameters of a second neural network model, or update the network parameters of a first neural network model.

In one exemplary embodiment, the apparatus further comprises a reference signal transmission module, and can also implement the technical solution of transmitting a reference signal according to a designated resource category, wherein the reference signal is used for acquiring the first check channel information.

In an exemplary embodiment, the computer readable storage medium may include, but is not limited to, any medium that can store a computer program, such as a USB flash drive, a Read-Only Memory (ROM), a Random Access Memory (RAM), a removable hard disk, a magnetic disk, or an optical disc.

For specific examples in the present embodiment, reference can be made to the examples described in the described embodiments and exemplary embodiments, and thus they will not be repeated again in the present embodiment.

The embodiments of the present disclosure further provide an electronic apparatus, including a memory and a processor; the memory stores a computer program, and the processor is configured to run the computer program, so as to execute the operations in any one of the method embodiments.

Optionally, in the embodiments, the processor may be arranged to execute the following steps by means of a computer program:
S1, acquiring first check channel information;
S2, determining first check channel state information according to the first check channel information; and
step S3, feeding back the first check channel state information.

Optionally, in another embodiment, the processor may be arranged to execute the following steps by means of a computer program:
S1, receiving first check channel state information;
S2, determining second check channel information according to the first check channel state information; and
S3, determining a network quality identifier according to the second check channel information.

In an exemplary embodiment, the electronic device can further comprise a transmission device and an input/output device, wherein the transmission device is connected to the processor, and the input/output device is connected to the processor.

For specific examples in the present embodiment, reference can be made to the examples described in the described embodiments and exemplary embodiments, and thus they will not be repeated again in the present embodiment.

Obviously, those skilled in the art should understand that the modules or steps in some embodiments of the present disclosure can be implemented by using a general computing device, and they can be integrated in a single computing device, and can also be distributed over a network consisting of a plurality of computing devices. They may be implemented by using executable program codes of the computing devices. Thus, they can be stored in a storage device and executed by the computing devices. Furthermore, in some cases, the shown or described steps may be executed in an order different from that described here, or they can be respectively implemented by individual Integrated Circuit modules, or they can be implemented by making a plurality of the modules or steps into a single Integrated Circuit module. Thus, the present disclosure is not limited to any specific hardware and software combinations.

The content above only relates to preferred embodiments of the present disclosure, and is not intended to limit the present disclosure. For a person skilled in the art, the present disclosure may have various modifications and changes. Any modifications, equivalent replacements, improvements, etc. made within the principle of the present disclosure shall all fall within the scope of protection of the present disclosure.

## Claims

1. A method for feeding back channel state information, comprising:
acquiring first check channel information;
determining first check channel state information according to the first check channel information; and
feeding back the first check channel state information.

2. The method for feeding back channel state information according to claim 1, wherein the first check channel information is acquired by means of one of the following manners:
acquiring the first check channel information according to received first signaling; and
acquiring the first check channel information according to an agreed method.

3. The method for feeding back channel state information according to claim 1, wherein acquiring the first check channel information comprises: determining the first check channel information according to first check data and first channel information.

4. The method for feeding back channel state information according to claim 3, wherein determining the first check channel information according to the first check data and the first channel information comprises:
combining the first check data and the first channel information at a specified position, to obtain the first check channel information.

5. The method for feeding back channel state information according to claim 4, wherein the specified position at least comprises one of the following: an agreed first position and a second position acquired according to received second signaling, the first position and the second position comprise one of the following: an index value of an array in a k-th dimension, a start index of the array in the k-th dimension, an end index of the array in the k-th dimension, and an index length of the array in the k-th dimension, wherein the array is an array corresponding to at least one of the first check data, the first channel information and the first check channel information, and k is a positive integer.

6. The method for feeding back channel state information according to claim 4, wherein the specified position at least comprises one of the following: equally-spaced L index values with a starting point being p, and L successive index values with the starting point being p, wherein p is an index value of a k-th dimension of an array corresponding to the first check channel information, p is a positive integer, L is the length of the k-th dimension of the first check data, and k is a positive integer.

7. The method for feeding back channel state information according to claim 6, wherein p comprises at least one of the following: a non-negative integer less than N-L, 0,1, N-L, and floor(N/2), wherein N is the length of the k-th dimension of the array corresponding to the first check channel information, L is the length of the k-th dimension of the first check data, k is a positive integer, and floor represents a rounding function.

8. The method for feeding back channel state information according to claim 4, wherein combining the first check data and the first channel information at a specified position, to obtain the first check channel information comprises:
determining an array corresponding to the first check channel information; and
inserting the first check data at the specified position of the array.

9. The method for feeding back channel state information according to claim 3 or 4, wherein the first check data comprises an agreed constant array or a known sequence array.

10. The method for feeding back channel state information according to claim 3 or 4, wherein the method further comprises:
determining, according to received third signaling, that the first check data is a subset of the first channel information, wherein the subset comprises a frequency domain subset and/or a time domain subset of the first channel information.

11. The method for feeding back channel state information according to claim 10, wherein the third signaling is used for determining a grouping manner of the first channel information, and determining the first check data according to the grouping manner, wherein the grouping manner comprises overlapped grouping and non-overlapped grouping.

12. The method for feeding back channel state information according to claim 3 or 4, wherein the first check data is a mapping of a subset of the first channel information.

13. The method for feeding back channel state information according to claim 1, wherein determining the first check channel state information according to the first check channel information comprises:
determining the first check channel state information according to the first check channel information and a first neural network model.

14. The method for feeding back channel state information according to claim 1, wherein feeding back the first check channel state information comprises:
feeding back the first check channel state information according to a designated report configuration category.

15. The method for feeding back the channel state information according to claim 1, wherein the method further comprises:
determining a network quality identifier according to the first check channel information and the first check channel state information; and feeding back the network quality identifier.

16. A method for receiving channel state information, comprising:
receiving first check channel state information;
determining second check channel information according to the first check channel state information; and
determining a network quality identifier according to the second check channel information.

17. The method for receiving the channel state information according to claim 16, wherein receiving the first check channel state information comprises:
receiving the first check channel state information according to a designated report configuration category.

18. The method for receiving the channel state information according to claim 16 or 17, wherein the method further comprises:
transmitting third signaling, wherein the third signaling is used for determining a subset of first channel information, and comprises: according to the third signaling, determining that first check data is a frequency domain subset and/or a time domain subset of the first channel information.

19. The method for receiving the channel state information according to claim 18, wherein the third signaling is used for determining a grouping manner of the first channel information, and determining the first check data according to the grouping manner, wherein the grouping manner comprises overlapped grouping and non-overlapped grouping.

20. The method for receiving the channel state information according to claim 16, wherein determining second check channel information according to the first check channel state information comprises:
determining second check channel information according to the first check channel state information and a second neural network model.

21. The method for receiving channel state information according to claim 16, wherein the second check channel information comprises second check data and second channel information.

22. The method for receiving the channel state information according to claim 16, wherein determining the network quality identifier according to the second check channel information comprises:
acquiring the second check data from a specified position of the second check channel information; and
determining a network quality identifier according to the first check data and the second check data.

23. The method for receiving the channel state information according to claim 22, wherein after determining the network quality identifier according to the first check data and the second check data, the method further comprises:
determining a feedback category of the channel state information according to the network quality identifier, or updating network parameters of a second neural network model, or updating network parameters of a first neural network model.

24. The method for receiving the channel state information according to claim 16, wherein the method further comprises:
transmitting a reference signal according to a designated resource category, wherein the reference signal is used for acquiring the first check channel information.

25. An apparatus for feeding back channel state information, comprising:
an acquisition module, configured to acquire first check channel information;
a first determination module, configured to determine first check channel state information according to the first check channel information; and
a feedback module, configured to feed back the first check channel state information.

26. An apparatus for receiving channel state information, comprising:
a receiving module, configured to receive first check channel state information;
a second determination module, configured to determine second check channel information according to the first check channel state information; and
a third determination module, configured to determine a network quality identifier according to the second check channel information.

27. A computer readable storage medium storing a computer program, wherein the computer program is configured to execute, when running, the method according to any one of claims 1 to 15 or the method according to any one of claims 16 to 24.

28. An electronic device, comprising a memory and a processor, wherein the memory stores a computer program, and the processor is configured to execute the method according to any one of claims 1 to 15 or the method according to any one of claims 16 to 24 by means of the computer program.
